# EUROPÄISCHE PATENTSCHRIFT

(11) **EP 3 235 633 B1**
(45) Veröffentlichungstag und Bekanntmachung des Hinweises auf die Patenterteilung: **31.10.2018**
(21) Anmeldenummer: 17154728.4
(22) Anmeldetag: 06.02.2017
(51) Int. Cl.: B29D 30/72, B32B 33/00, B60C 13/00

(54) **VERFAHREN ZUR HERSTELLUNG EINES FAHRZEUGREIFENS**
METHOD FOR PRODUCING A VEHICLE TYRE
PROCÉDÉ DE FABRICATION D'UN PNEUMATIQUE DE VÉHICULE

(30) Priorität: 19.04.2016 DE 102016206556
(43) Veröffentlichungstag der Anmeldung: 25.10.2017
(73) Patentinhaber: Continental Reifen Deutschland GmbH, 30165 Hannover (DE)
(72) Erfinder: Schramm, Oliver, 31177 Harsum (DE); Liu, Fei, 30173 Hannover (DE)
(74) Vertreter: Widjaja, Wira

(56) Entgegenhaltungen:
- EP-A1- 1 625 952
- EP-A1- 2 905 125
- CA-A- 322 778
- JP-A- 2005 164 655
- US-A- 5 300 164
- US-A1- 2008 257 471
- US-A1- 2010 092 716
- Wikipedia: "QR code", , 19. Juli 2014 (2014-07-19), XP055149226, Gefunden im Internet: URL:http://en.wikipedia.org/w/index.php?ti tle=QR_code&oldid=617637657 [gefunden am 2014-10-28]

## Beschreibung

Die Erfindung betrifft ein Verfahren zur Herstellung eines Fahrzeugreifens gemäß dem Oberbegriff des Anspruchs 1.

Es ist bekannt, den Fahrzeugreifen nach der Reifenproduktion mit einer Markierung oder einem Code zu versehen. Das Aufbringen des Codes erfolgt im Allgemeinen durch ein Einprägen in fertig hergestellten Fahrzeugreifen. Ein wesentlicher Nachteil bei dieser Herstellungsmethode besteht darin, dass der Fahrzeugreifen in der Seitenwand eine gekrümmte Fläche besitzt. Dadurch ist das Aufbringen des Codes nur mit einem hohen Herstellungsaufwand möglich.

Gemäß Wikipedia: "QR-Code", 19. Juli 2014, XP055149226, ist ein QR-
Code (englisch Quick Response, "schnelle Antwort", als Markenbegriff "QR Code") ein zweidimensionaler Code, der von der japanischen Firma Denso Wave im Jahr 1994 entwickelt wurde. Der QR-Code besteht aus einer quadratischen Matrix aus Quadraten, die die kodierten Daten binär darstellen. Es gibt mehrere Standards, welche die Kodierung von QR-Codes beschreiben.

Aus der US 2010/092716 A1 ist ein mehrschichtiges "self-adhering-label" mit einem display-layer aus Gummi bekannt, auf dessen Außenseite Text oder graphische Elemente angebracht sind, und auf dessen Innenseitee ein adhesive layer aufgebracht ist, welcher mit einem releasable layer abgedeckt wird. Nach Abziehen des releasable layers wird das label unmittelbar auf die Reifenseitenwand aufgeklebt. Bei dem aus der JP 2005 164655 A bekannten Verfahren, welches ein Verfahren gemäß dem Oberbegriff des Anspruchs 1 ist, werden auf einem Display-Label, dessen Ausgestaltung nicht offenbart ist, mehrere QR-Codes aufgebracht und dieses Label wird unmittelbar auf die Seitenwand appliziert. Dabei steht im Vordergrund, zumindest zwei identische QR-Codes auf einer Seitenwand anzubringen, um bei einer Beschädigung des einen den zweiten noch lesen zu können. Die EP 2 905 125 A1 befasst sich mit einem Verfahren zum Applizieren eines digital code patterns, also eines QR-Codes, auf einem Gummiartikel, beispielsweise einem Fahrzeugreifen. Der QR-Code wird dabei unmittelbar auf die Reifenseitenwand aufgebracht, wobei das Codemuster erste und zweite Oberflächenbereiche aufweist, die voneinander unterschiedliche Reflexionskoeffizienten aufweisen. Die US 2008/257471 A1 offenbart ein Element aus einer äußeren Lage, etwa einer Farb-oder Lackschicht, einer elastomeren, eingefärbten Schicht oder dergleichen und einer zweiten Lage aus einem bielastischen Gewirk oder Gestrick, welches eine Barrierewirkung gegenüber Migration von Bestandteilen aus schwarzem Gummimaterial sicher stellen soll und ein Ablösen des Elementes durch seine Elastizität verhindern soll. Das Element wird in eine Vertiefung der Seitenwand, welche während der Herstellung des Reifens ausgebildet wird, eingeklebt. Die EP 1 625 952 A1 befasst sich mit der Herstellung einer sogenannten "weißen Seitenwand", also einem an der Seitenwand ringförmig umlaufenden, in eine ringartig umlaufende Vertiefung eingeklebten Element aus einer weißen Mischung. Dieses Element weist daher auch einen mehrschichtigen Aufbau mit einer Barriereschicht auf, um ein Durchwandern von Bestandteilen des darunter befindlichen schwarzen Gummimaterials zu verhindern.

Der Erfindung liegt die Aufgabe zugrunde, ein verbessertes Verfahren zur Herstellung von Fahrzeugreifen bereitzustellen.

Gelöst wird die Aufgabe gemäß Anspruch 1 dadurch, dass ein Verfahren mit folgenden Schritten eingesetzt wird:
Bereitstellen einer Materiallage aus einem vulkanisierten Gummimaterial in Schritt a),
Nachbearbeitung in Schritt c) zur Bildung zumindest eines Gummiflickens (1),
bei der Herstellung des Fahrzeugreifens Einbringen einer Vertiefung in die Seitenwand des Fahrzeugreifens zur Applizierung des Gummiflickens (1) und
Aufbringen des Flickens (1) mit dem QR-Code in die Vertiefung der Seitenwand in Schritt f).

Ein Vorteil der Erfindung ist insbesondere darin zu sehen, dass durch das Verfahren die Herstellung von Fahrzeugreifen verbessert wird.

Das Aufbringen des QR-Codes auf eine gesonderte Materiallage, die auf einer ebenen Unterlage aufliegt, lässt sich mit einer hohen Präzision durchführen. Bei herkömmlichen Verfahren erfolgt das Aufbringen des Codes auf eine gekrümmte Außenkontur eine Seitenwand eines Fahrzeugreifens.

Außerdem wird mit dem Verfahren die Zykluszeit zur Herstellung der Fahrzeugreifen wesentlich verbessert.

Das Herstellen der Flicken mit den jeweils einzelnen QR-Codes kann in einem parallel geführten Herstellungsprozess erfolgen. Dieser Herstellungsprozess ist grundsätzlich unabhängig vom Herstellen der Fahrzeugreifen bis zum Vulkanisieren der Fahrzeugreifen. Die Flicken mit dem QR-Code werden erst nach der Reifenvulkanisation in die Vertiefung der Seitenwand eingebracht und dort beispielsweise über eine Kaltvulkanisation mit dem Reifen verbunden.

In einer vorteilhaften Weiterbildung der Erfindung ist vorgesehen, dass bei Schritt b) das Aufbringen des QR-Codes auf die Materiallage mit einem Eingravierverfahren erfolgt. Mit einem Eingravierverfahren lässt sich der QR-Code mit einer hohen Präzision auf die vorvulkanisierte Materiallage aufbringen.

In einer weiteren vorteilhaften Weiterbildung der Erfindung ist vorgesehen, dass bei Schritt b) das Aufbringen des QR-Codes auf die Materiallage mit einem Fräsverfahren erfolgt.

In einer weiteren vorteilhaften Weiterbildung der Erfindung ist vorgesehen, dass bei Schritt b) das Aufbringen des QR-Codes auf die Materiallage mit einem Druckverfahren erfolgt. Mit einem Druckverfahren lässt sich der QR-Code mit einer hohen Prozessgeschwindigkeit auf die Materiallage aufbringen.

In einer weiteren vorteilhaften Weiterbildung der Erfindung ist vorgesehen, dass bei Schritt b) der QR-Codes mit einem Laser aufgebracht wird.

Mit dem Laser lassen sich mit einer hohen Prozessgeschwindigkeit entsprechende Vertiefungen zur Ausbildung des QR-Codes in die Materiallage einbrennen bzw. eingravieren.

In einer weiteren vorteilhaften Weiterbildung der Erfindung ist vorgesehen, dass bei Schritt b) eine Vielzahl von QR-Codes auf die Materiallage aufgebracht werden, wobei nachfolgend aus der Materiallage einzelne Gummiflicken mit jeweils einem QR-Code heraus geschnitten werden.

Bei diesem Herstellungsverfahren besteht die Materiallage aus einem länglichen Materialstreifen, auf dem nacheinander einzelne QR-Codes mit einem Laser aufgebracht werden. Anschließend wird der Materialstreifen in einzelne Gummiflicken mit jeweils einem QR-Code zugeschnitten. Die einzelnen Gummiflicken haben jeweils eine im Wesentlichen quadratische Form, die auf die Vertiefung in der Seitenwand abgestimmt ist.

In einer weiteren vorteilhaften Weiterbildung der Erfindung ist vorgesehen, dass das Einbringen der Vertiefung in die Seitenwand des Reifens durch eine entsprechende Formgebung der Vulkanisationssegmente und beim Vulkanisieren des Fahrzeugreifens erfolgt.

Dadurch entfällt eine entsprechende Vorbereitung der Seitenwand nach der Reifenvulkanisation.

In einer weiteren vorteilhaften Weiterbildung der Erfindung ist vorgesehen, dass der QR-Code zumindestens Informationen zum Herstellungsdatum des Fahrzeugreifens, zum produzierenden Reifenwerk und zum Fahrzeughersteller, für den der Fahrzeugreifen bestimmt ist, umfasst.

Dadurch werden mit dem QR-Code alle wichtigen Informationen zu einem Fahrzeugreifen auf einfache Weise bereit gestellt.

Anhand eines Ausführungsbeispieles soll die Erfindung näher erläutert werden. Es zeigt:

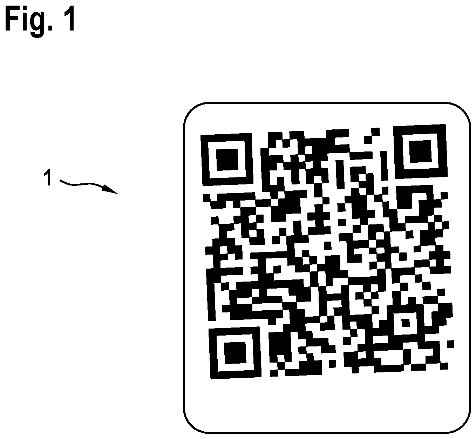

- Fig. 1 :: einen Gummiflicken mit einem QR-Code.

Die Fig.1 zeigt einen Gummiflicken 1 mit einem QR-Code. Der Gummiflicken 1 besteht aus einem vulkanisierten Gummimaterial. Auf dem Gummiflicken 1 wird mit einem Laser das dargestellte Muster mit entsprechenden Materialvertiefungen auf die Materialoberfläche des Gummiflickens eingebrannt. Der Fahrzeugreifen wird mit einem herkömmlichen Herstellungsverfahren produziert, wobei bei der Reifenvulkanisation eine entsprechende Vertiefung an einer Stelle der Seitenwand des Fahrzeugreifens eingebracht wird. Nach der Reifenvulkanisation wird der Gummiflicken 1 in die Vertiefung der Seitenwand eingesetzt und dort beispielsweise über eine Kaltvulkanisation mit dem Fahrzeugreifen verbunden. Durch dieses Herstellungsverfahren kann der QR-Code mit einer hohen Präzision und einer hohen Prozessgeschwindigkeit auf den dargestellten Gummiflicken aufgebracht werden. Die Informationen, die auf dem QR-Code enthalten sind, können auf einfache Weise mit einer Kamera vom Fahrzeughersteller von Werkstätten oder von Endkunden ausgelesen werden.

### Bezugszeichenliste

### (ist Teil der Beschreibung)

- 1: Gummiflicken bzw. Gummipatch mit einem QR-Code

## Patentansprüche

1. Verfahren zur Herstellung eines Fahrzeugreifens mit folgenden Schritten:
a) Bereitstellen einer flachen Materiallage auf einer ebenen Unterlage,
b) Aufbringen von mindestens einem visuell sichtbaren QR-Code auf die Materiallage, wobei mit dem QR-Code eine Vielzahl von verschlüsselten Informationen zu einem Fahrzeugreifen auf die Materiallage übertragen werden,
wobei die verschlüsselten Informationen mit einer optischen Kamera entschlüsselt werden können,
c) Nachbearbeitung der Materiallage mit dem QR-Code, um die Materiallage in Form eines Flickens (1) mit dem QR-Code an einen Fahrzeugreifen anzubringen,
d) Bereitstellen eines fertig vulkanisierten Fahrzeugreifens,
f) Aufbringen des Flickens (1) mit dem QR-Code an der Seitenwand und Herstellen einer festen Materialverbindung mit der Seitenwand des Fahrzeugreifens,
wobei die feste Materialverbindung mit einem Klebeverfahren oder einem kalten Vulkanisationsverfahren hergestellt wird,
g) Fertigstellen des Fahrzeugreifens mit weiteren Schritten,
**gekennzeichnet durch folgende Schritte**:
Bereitstellen einer Materiallage aus einem vulkanisierten Gummimaterial in Schritt a),
Nachbearbeitung in Schritt c) zur Bildung zumindest eines Gummiflickens (1),
bei der Herstellung des Fahrzeugreifens Einbringen einer Vertiefung in die Seitenwand des Fahrzeugreifens zur Applizierung des Gummiflickens (1) und
Aufbringen des Flickens (1) mit dem QR-Code in die Vertiefung der Seitenwand in Schritt f).

2. Verfahren nach Anspruch 1,
**dadurch gekennzeichnet, dass**
bei Schritt b) das Aufbringen des QR-Codes auf die Materiallage mit einem Eingravierverfahren erfolgt.

3. Verfahren nach Anspruch 1,
**dadurch gekennzeichnet, dass**
bei Schritt b) das Aufbringen des QR-Codes auf die Materiallage mit einem Fräsverfahren erfolgt.

4. Verfahren nach Anspruch 1,
**dadurch gekennzeichnet, dass**
bei Schritt b) das Aufbringen des QR-Codes auf die Materiallage mit einem Druckverfahren erfolgt.

5. Verfahren nach Anspruch 1,
**dadurch gekennzeichnet, dass**
bei Schritt b) der QR-Code mit einem Laser aufgebracht wird.

6. Verfahren nach einem der vorhergehenden Ansprüche, **dadurch gekennzeichnet, dass**
bei Schritt b) eine Vielzahl von QR-Codes auf die Materiallage aufgebracht wird, wobei nachfolgend aus der Materiallage einzelne Gummiflicken (1) mit jeweils einem QR-Code heraus geschnitten werden.

7. Verfahren nach einem der vorhergehenden Ansprüche,
**dadurch gekennzeichnet, dass**
das Einbringen der Vertiefung in die Seitenwand des Reifens durch eine entsprechende Formgebung der Vulkanisationssegmente und beim Vulkanisieren des Fahrzeugreifens erfolgt.

8. Verfahren nach einem der vorhergehenden Ansprüche,
**dadurch gekennzeichnet, dass**
der QR-Code zumindestens Informationen zum Herstellungsdatum des Fahrzeugreifens, zum produzierenden Reifenwerk und zum Fahrzeughersteller, für den der Fahrzeugreifen bestimmt ist, umfasst.

## Claims

1. Method for producing a vehicle tyre with the following steps:
a) providing a flat layer of material on a level underlying surface,
b) applying at least one visible QR code to the layer of material, wherein the QR code can be used to transfer to the layer of material a multitude of encoded information about a vehicle tyre,
wherein the encoded information can be decoded with an optical camera,
c) reworking the layer of material with the QR code in order to attach the layer of material to a vehicle tyre in the form of a patch (1) with the QR code,
d) providing a finished vulcanized vehicle tyre,
f) applying the patch (1) with the QR code to the sidewall and producing a firm material bond with the sidewall of the vehicle tyre,
wherein the firm material bond is produced by an adhesion process or a cold vulcanization process,
g) completing the vehicle tyre with further steps, **characterized by** the following steps:
providing a layer of material of a vulcanized rubber material in step a),
reworking in step c) to form at least one rubber patch (1),
during the production of the vehicle tyre, introducing a depression into the sidewall of the vehicle tyre for the application of the rubber patch (1) and
applying the patch (1) with the QR code into the depression in the sidewall in step f).

2. Method according to Claim 1,
**characterized in that**
in step b), the application of the QR code to the layer of material is performed by an engraving process.

3. Method according to Claim 1,
**characterized in that**
in step b), the application of the QR code to the layer of material is performed by a milling process.

4. Method according to Claim 1,
**characterized in that**
in step b), the application of the QR code to the layer of material is performed by a printing process.

5. Method according to Claim 1,
**characterized in that**
in step b), the QR code is applied by a laser.

6. Method according to one of the preceding claims,
**characterized in that**
in step b), a plurality of QR codes are applied to the layer of material, wherein individual rubber patches (1) each with a QR code are subsequently cut out from the layer of material.

7. Method according to one of the preceding claims,
**characterized in that**
the introduction of the depression into the sidewall of the tyre is performed by an appropriate shaping of the vulcanization segments and during the vulcanizing of the vehicle tyre.

8. Method according to one of the preceding claims,
**characterized in that**
the QR code comprises at least information concerning the date of production of the vehicle tyre, the tyre production works and the vehicle manufacturer for which the vehicle tyre is intended.

## Revendications

1. Procédé de fabrication d'un pneu de véhicule, comprenant les étapes suivantes :
a) fourniture d'une couche de matériau plate sur un support plan,
b) application d'au moins un code QR visible visuellement sur la couche de matériau, une pluralité d'informations chiffrées à propos d'un pneu de véhicule pouvant être transmise sur la couche de matériau avec le code QR,
les informations chiffrées pouvant être déchiffrées avec une caméra optique,
c) post-traitement de la couche de matériau comportant le code QR afin d'appliquer la couche de matériau sous la forme d'une pastille (1) munie du code QR sur un pneu de véhicule,
d) fourniture d'un pneu de véhicule vulcanisé terminé,
f) application de la pastille (1) munie du code QR sur la paroi latérale et établissement d'une liaison de matières fixe avec la paroi latérale du pneu de véhicule,
la liaison de matières fixe étant établie avec un procédé de collage ou un procédé de vulcanisation à froid,
g) achèvement du pneu de véhicule avec des étapes supplémentaires,
**caractérisé par** les étapes suivantes :
fourniture d'une couche de matériau en un caoutchouc vulcanisé à l'étape a),
post-traitement à l'étape c) en vue de former au moins une pastille en caoutchouc (1),
lors de la fabrication du pneu de véhicule, incorporation d'un creux dans la paroi latérale du pneu de véhicule pour l'application de la pastille en caoutchouc (1) et
application de la pastille en caoutchouc (1) munie du code QR dans le creux de la paroi latérale à l'étape f).

2. Procédé selon la revendication 1, **caractérisé en ce qu'**à l'étape b), l'application du code QR sur la couche de matériau s'effectue avec un procédé de gravure.

3. Procédé selon la revendication 1, **caractérisé en ce qu'**à l'étape b), l'application du code QR sur la couche de matériau s'effectue avec un procédé de fraisage.

4. Procédé selon la revendication 1, **caractérisé en ce qu'**à l'étape b), l'application du code QR sur la couche de matériau s'effectue avec un procédé d'impression.

5. Procédé selon la revendication 1, **caractérisé en ce qu'**à l'étape b), le code QR est appliqué avec un laser.

6. Procédé selon l'une des revendications précédentes, **caractérisé en ce qu'**à l'étape b), une pluralité de codes QR sont appliqués sur la couche de matériau, des pastilles en caoutchouc (1) individuelles comportant respectivement un code QR étant ensuite découpées dans la couche de matériau.

7. Procédé selon l'une des revendications précédentes, **caractérisé en ce que** l'incorporation du creux dans la paroi latérale du pneu est réalisée par un façonnage en conséquence des segments de vulcanisation et lors de la vulcanisation du pneu de véhicule.

8. Procédé selon l'une des revendications précédentes, **caractérisé en ce que** le code QR comprend au moins des informations à propos de la date de fabrication du pneu de véhicule, à propos de l'usine à pneu productrice et à propos du constructeur du véhicule pour lequel le pneu de véhicule est conçu.
